# EUROPÄISCHE PATENTANMELDUNG

(11) **EP 3 028 890 A1**
(43) Veröffentlichungstag der Anmeldung: **08.06.2016**
(21) Anmeldenummer: 15187094.6
(22) Anmeldetag: 28.09.2015
(51) Int. Cl.: B60L 1/00, H02J 1/00, H04L 12/40

(54) **ELEKTRONISCHES BAUTEIL UND BORDNETZGRUPPE FÜR EIN ELEKTRISCH ANTREIBBARES FORTBEWEGUNGSMITTEL**

(30) Priorität: 02.12.2014 DE 102014224660
(71) Anmelder: ROBERT BOSCH GMBH, 70442 Stuttgart (DE)
(72) Erfinder: Kuerschner, Holger, 70499 Stuttgart (DE); Kussmann, Adrian, 70794 Filderstadt (DE)

(57) **Zusammenfassung**

Es werden eine Bordnetzgruppe und ein elektronisches Bauteil für ein elektrisch antreibbares Fortbewegungsmittel vorgeschlagen. Die Bordnetzgruppe (1) umfasst:
- einen Hochvoltabschnitt (4),
- einen Niedervoltabschnitt (5),
- eine erste DC/DC-Wandlereinheit (16a), und
- eine zweite DC/DC-Wandlereinheit (16b), wobei
- die erste DC/DC-Wandlereinheit (16a) eingangsseitig am Hochvoltabschnitt (4) angeschlossen ist, und ausgangsseitig zur Versorgung einer ersten Gruppe (11) elektrischer Verbraucher eingerichtet ist, und
- die zweite DC/DC-Wandlereinheit (16b) eingangsseitig am Hochvoltabschnitt (4) angeschlossen ist, und im Gegensatz zur ersten Gruppe (11) elektrischer Verbraucher ausgangsseitig zur Versorgung einer zweiten Gruppe (12) elektrischer Verbraucher eingerichtet ist.

## Beschreibung

### Stand der Technik

Die vorliegende Erfindung betrifft ein elektronisches Bauteil sowie eine Bordnetzgruppe für ein elektrisch antreibbares Fortbewegungsmittel mit zwei Bordnetzabschnitten unterschiedlicher Nennspannungen. Insbesondere betrifft die vorliegende Erfindung eine Reduzierung elektrischer Verluste und Komplikationen beim parallelen Betrieb von Bordnetzabschnitten unterschiedlicher elektrischer Spannungen.

Im Stand der Technik sind elektrisch antreibbare Fahrzeuge bekannt, welche zur Verringerung elektrischer Verluste ein Traktionsbordnetz aufweisen, welches eine erheblich höhere elektrische Spannung als ein paralleles elektrisches Bordnetz zur Versorgung weiterer elektrischer Verbraucher aufweist. Beispiele sind elektrisch antreibbare PKW (vollelektrisch oder Hybrid), elektrisch antreibbare Zweiräder (Pedelec, E-Bike) und Transporteinheiten, welche mitunter teilautomatisiert oder vollständig automatisiert für den Transport von Gütern eingesetzt werden. Um elektrische Energie aus einer Traktionsbatterie über das Hochvolt-Bordnetz auch für die Versorgung elektrischer Verbraucher im Niedervolt-Bordnetz verwenden zu können, werden üblicherweise DC/DC-Wandler eingesetzt.

DE 10 2004 013 243 A1 offenbart ein Verfahren und eine Vorrichtung zur Wirkungsgradverbesserung parallel geschalteter Gleichspannungswandler, wobei zumindest einer der Gleichspannungswandler als Spannungsquelle und die übrigen Gleichspannungswandler als Stromquelle betrieben werden, um Reglerschwingungen zu vermeiden. Hierbei wird ein Verbraucher parallel über sämtliche Spannungswandler mit elektrischer Energie versorgt. Optional können die Gleichspannungswandler über einen CAN-BUS für einen Datenaustausch miteinander verbunden werden.

DE 10 2004 036 563 A1 offenbart eine Vorrichtung zur Spannungsstabilisierung, bei welcher ein Spannungswandler eingangsseitig mit einer Batterie sowie Hochstromverbrauchern und ausgangsseitig mit spannungskritischen Verbrauchern elektrisch verbunden ist. Unterschiedliche Strategien zum Schutz der spannungskritischen Verbraucher werden vorgeschlagen, wobei der Spannungswandler bspw. als kombinierter Hoch- und Tiefsetzsteller ausgestaltet ist. Als Beispiel für spannungskritische Verbraucher werden Glühlampen genannt.

Die vorgenannten Lösungen schöpfen die Möglichkeiten zur Verringerung von Verlusten in Bordnetzen elektrisch antreibbarer Fortbewegungsmittel nicht zufriedenstellend aus.

### Offenbarung der Erfindung

Die vorstehend identifizierte Aufgabe wird erfindungsgemäß durch eine Bordnetzgruppe (auch "Bordnetzbaugruppe" oder "Bordnetzanordnung") für ein elektrisch antreibbares Fortbewegungsmittel gelöst. Die Bordnetzgruppe umfasst einen Hochvoltabschnitt, einen Niedervoltabschnitt, eine erste DC/DC-Wandlereinheit und eine zweite DC/DC-Wandlereinheit. Die erste DC/DC-Wandlereinheit ist eingangsseitig am Hochvoltabschnitt angeschlossen, wodurch sie durch eine Traktionsbatterie, eine Brennstoffzelle o.ä. mit elektrischer Energie versorgt werden kann. Ausgangsseitig ist die erste DC/DC-Wandlereinheit zur Versorgung einer ersten Gruppe elektrischer Verbraucher eingerichtet. Die erste Gruppe elektrischer Verbraucher kann einen oder mehrere Verbraucher umfassen. Die zweite DC/DC-Wandlereinheit ist eingangsseitig am Hochvoltabschnitt angeschlossen und ausgangsseitig zur Versorgung einer zweiten Gruppe elektrischer Verbraucher eingerichtet. Die erste und zweite Gruppe elektrischer Verbraucher sind in dem Niedervoltabschnitt bzw. in voneinander getrennten Niedervoltabschnitten der Bordnetzgruppe angeordnet und können einen erheblich niedrigeren Nennspannungsbetrag aufweisen als der Hochvoltabschnitt. Im Gegensatz zum Stand der Technik werden auf diese Weise mehrere DC/DC-Wandlereinheiten über das elektrisch antreibbare Fortbewegungsmittel verteilt, um räumlich getrennt voneinander angeordnete Verbrauchergruppen mit einer geringeren Spannung (Niederspannung) versorgen zu können. Diese kann auch von Niedervoltabschnitt zu Niedervoltabschnitt unterschiedlich sein. Dies bietet unterschiedliche Vorteile:
einerseits wird der Kabelbaum des elektrisch antreibbaren Fortbewegungsmittels durch eine erfindungsgemäße Bordnetzgruppe deutlich kleiner und leichter, denn der Strom sinkt bei gleicher Leistung, wodurch weniger Kupferverluste entstehen. Im Wesentlichen kann auf ein ausgedehntes 12V-Bordnetz verzichtet werden, sodass keine Gefahr eines unbeabsichtigten Überkoppelns aus dem Hochvoltabschnitt in einen Niedervoltabschnitt des Bordnetzes besteht.

Die Unteransprüche zeigen bevorzugte Weiterbildungen der Erfindung.

Die erste DC/DC-Wandlereinheit kann ein erstes BUS-Steuergerät umfassen, welches eingerichtet ist, eine Energieversorgung eines Verbrauchers der ersten Gruppe elektrischer Verbraucher zu steuern. Bspw. kann das BUS-Steuergerät einen Steuerbefehl ausgeben, im Ansprechen auf welchen ein Verbraucher oder die gesamte erste Gruppe elektrischer Verbraucher mit elektrischer Energie versorgt wird bzw. von der Energieversorgung getrennt wird. Auch unterschiedliche Stufen (z.B. Ausgangsspannungen in Höhe von 6V, 12V oder 24V) oder kontinuierliche Prozentagen einer Nennleistungsaufnahme der Verbraucher können (je nach Natur des Verbrauchers) durch das BUS-Steuergerät realisiert werden. Auf diese Weise können ausgedehnte Leitungen zu Bedieneinheiten einer Anwenderschnittstelle entfallen.

Alternativ oder zusätzlich kann auch die Funktionsweise eines DC/DC-Wandlers der ersten DC/DC-Wandlereinheit durch das BUS-Steuergerät beeinflusst werden (z.B. sog. "wake up"-Befehl), um eine bestimmungsgemäße Energieversorgung wie vorgeschrieben durchzuführen und/oder den DC/DC-Wandler selbst in einen Ruhezustand zu versetzen, um in Zeiträumen ohne Bedarf die Leistungsaufnahme des DC/DC-Wandlers zu verringern. Auf diese Weise kann der Gesamtwirkungsgrad des elektrisch antreibbaren Fortbewegungsmittels durch die vorliegende Erfindung erhöht werden.

Bevorzugt kann die Bordnetzgruppe ein zentrales BUS-Steuergerät umfassen, welches bspw. informationstechnisch mit einer Bedieneinheit/Anwenderschnittstelle verbunden ist. Das zentrale Bus-Steuergerät kann alternativ auch selbst die Bedieneinheit/Anwenderschnittstelle aufweisen bzw. als Bestandteil der Bedieneinheit/Anwenderschnittstelle ausgeführt sein. Die Bedieneinheit ist in somit eingerichtet, im Ansprechen auf eine Anwendereingabe das zentrale BUS-Steuergerät (z.B. im Hochvoltabschnitt der Bordnetzgruppe angeordnet) anzuweisen, eine Nachricht an das erste BUS-Steuergerät der ersten DC/DC-Wandlereinheit zu senden, im Ansprechen auf welche dieses die Steuerung der Energieversorgung eines Verbrauchers der ersten Gruppe elektrischer Verbraucher anpasst. Dies ermöglicht eine Anpassung der Betriebsweise der Verbraucher der ersten Gruppe theoretisch im Ansprechen auf eine Nachricht eines jeden am BUS angeschlossenen Steuergerätes ("Teilnehmer").

Bevorzugt kann die erste Gruppe von Verbrauchern ein Frontlicht (Abblendlicht und/oder Fernlicht) und einen Fahrtrichtungsanzeiger umfassen. Die üblicherweise stets gegebene räumliche Nähe eines Frontlichtes zu (Teilen eines) Fahrtrichtungsanzeigeensembles bedingt erhebliches Einsparpotential bezüglich Kosten und Gewicht sowie bezüglich des Montageaufwandes in Verbindung mit dem Kabelbaum. Die zweite Gruppe von Verbrauchern kann ein Rücklicht, einen Fahrtrichtungsanzeiger und eine Nummernschildbeleuchtung umfassen, wobei der Fahrtrichtungsanzeiger nun ein im Heck des Fortbewegungsmittels angeordneter Teil des Fahrtrichtungsanzeigeensembles ist. Weitere Bestandteile der ersten oder zweiten Gruppe elektrischer Verbraucher oder Bestandteil einer dritten Gruppe elektrischer Verbraucher, welche an einer dritten DC/DC-Wandlereinheit vorgesehen ist, können ein Anzeigeinstrument und/oder eine akustische Signaleinrichtung zur Ausgabe akustischer Signale an den Anwender des Fortbewegungsmittels sein. Durch die vorgenannte Gruppierung der Verbraucher kann die insgesamt erforderliche Leitungslänge drastisch reduziert werden, wodurch Gewichts- und Kostenersparnisse erzielt werden. Zudem nimmt die Fehleranfälligkeit des Bordnetzes erheblich ab.

Der Hochvoltabschnitt des Bordnetzes kann bspw. eine Nennspannung im Bereich zwischen 30V und 800V, insbesondere zwischen 45V und 500V aufweisen. Solche Spannungen sind üblich bei elektrisch antreibbaren Fortbewegungsmitteln, um die elektrischen Verluste auf den Leitungen (Kupferverluste) gering zu halten. Der Niedervoltabschnitt des Bordnetzes kann bspw. eine Nennspannung im Bereich zwischen 5V und 30V, insbesondere zwischen 12V und 24V, aufweisen. Solche Spannungen haben sich bspw. aus Gründen einer einfach herzustellenden elektrischen Isolierung und aus Sicherheitsaspekten für die Versorgung weiterer elektrischer Verbraucher im Fortbewegungsmittel (z.B. für Beleuchtung und Informationstechnik) bewährt.

Gemäß einem zweiten Aspekt der vorliegenden Erfindung wird ein elektronisches Bauteil für ein elektrisch antreibbares Fortbewegungsmittel vorgeschlagen. Das elektronische Bauteil kann bspw. ein Gehäuse aufweisen, an bzw. in welchem mehrere oder sämtliche der folgenden Elemente angeordnet sind. Ein Eingang ist zum Anschluss eines Hochvoltabschnittes des Bordnetzes vorgesehen. Ein weiterer Eingang ist zum Anschluss eines Niedervoltabschnittes mit einer Gruppe elektrischer Verbraucher vorgesehen. Ein DC/DC-Wandler ist zur Vermittlung der unterschiedlichen Spannungen auf dem Hochvoltabschnitt und dem Niedervoltabschnitt vorgesehen. Erfindungsgemäß ist zusätzlich ein BUS-Steuergerät vorgesehen, welches eingerichtet ist, den DC/DC-Wandler aufzuwecken und/oder in einen Ruhezustand zu versetzen, um die elektrischen Verluste im Fortbewegungsmittel gering zu halten bzw. dessen elektrischen Wirkungsgrad zu erhöhen. Die Merkmale, Merkmalskombinationen und die sich aus diesen ergebenden Vorteile sind in Verbindung mit dem erstgenannten Erfindungsaspekt bereits eingehend diskutiert worden, sodass zur Vermeidung von Wiederholungen auf die obigen Ausführungen verwiesen werden kann.

Bevorzugt kann das elektronische Bauteil weiter eine Auswerteeinheit (z.B. einen Mikrocontroller, einen Nanocontroller, einen programmierbaren Prozessor, o.ä.) umfassen, welcher eingerichtet ist, die Gruppe elektrischer Verbraucher im Ansprechen auf ein Signal des BUS-Steuergerätes mit elektrischer Energie zu versorgen. Auf diese Weise sind keine separaten elektrischen Leitungen von durch den Anwender bedienbaren Schalteinrichtungen zu den jeweiligen Verbrauchern erforderlich, wodurch Gewichts- und Kostenvorteile erzielt werden.

Beispielsweise kann das elektronische Bauteil weiter einen zweiten DC/DC-Wandler umfassen, welcher eingerichtet ist, die Auswerteeinheit unabhängig von der Gruppe elektrischer Verbraucher mit elektrischer Energie zu versorgen. Im Falle eines ausgangsseitigen Kurzschlusses (verbraucherseitig) kann eine sichere Energieversorgung der Auswerteeinheit sowie des BUS-Steuergerätes sichergestellt werden. Auch im Falle eines verbraucherseitigen Kurzschlusses kann somit die informationstechnische Erreichbarkeit und die Logik des elektronischen Bauteils sichergestellt werden.

Gemäß einem dritten Aspekt der vorliegenden Erfindung wird ein elektrisch antreibbares Fortbewegungsmittel vorgeschlagen, welches bspw. als PKW, als Transporteinheit, als Zweirad etc. ausgestaltet sein kann. Das elektrisch antreibbare Fortbewegungsmittel umfasst eine Bordnetzgruppe, wie sie im erstgenannten Erfindungsaspekt oben im Detail beschrieben worden ist. Alternativ oder zusätzlich kann das elektrisch antreibbare Fortbewegungsmittel ein elektronisches Bauteil gemäß dem zweitgenannten Erfindungsaspekt umfassen. Die Architektur der elektrischen Energieversorgung, welche erfindungsgemäß vorgesehen ist, ermöglicht Gewichts-, Kosten- und Aufwandsersparnisse für elektrisch antreibbare Fortbewegungsmittel.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine Prinzipskizze veranschaulichend eine Bordnetzarchitektur gemäß dem Stand der Technik;
- Figur 2: eine Prinzipskizze veranschaulichend eine Bordnetzarchitektur gemäß einem Ausführungsbeispiel eines erfindungsgemäßen Fortbewegungsmittels;
- Figur 3: ein Blockschaltbild eines ersten Ausführungsbeispiels eines erfindungsgemäßen elektronischen Bauteils;
- Figur 4: ein Blockschaltbild eines zweiten Ausführungsbeispiels eines erfindungsgemäßen elektronischen Bauteils; und
- Figur 5: eine Skizze eines Realisierungsvorschlags einer Bordnetzgruppe gemäß einem Ausführungsbeispiel der vorliegenden Erfindung.

### Ausführungsformen der Erfindung

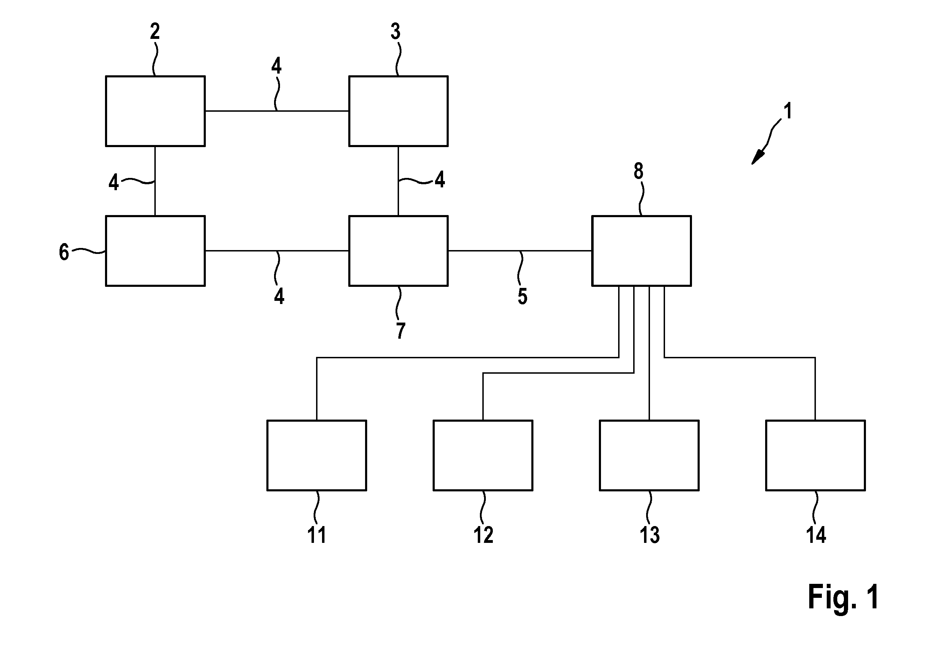

Figur 1 zeigt eine Prinzipskizze einer Bordnetzgruppe 1 gemäß dem Stand der Technik. Eine Antriebseinheit 2 wird über einen Hochvoltabschnitt 4 aus einer Traktionsbatterie 3 (Nennspannung 48V) gespeist. Eine Spannungssteuerungseinheit 6 ist vorgesehen, die elektrischen Vorgänge im Hochvoltabschnitt 4 zu steuern. Die Schnittstelle zwischen dem Hochvoltabschnitt 4 und einem Niedervoltabschnitt 5 bildet ein zentraler DC/DC-Wandler 7, welcher den Spannungsunterschied des Hochvoltabschnitts 4 zum 12V-Spannungspegel auf dem Niedervoltabschnitt 5 realisiert. Über eine Bedieneinheit 8 sind einzelne elektrische Leitungen zu einer Frontlichtanlage und einem Blinker 11, einer Rücklichtanlage und einem Blinker 12, Instrumenten und einer Hupe 13 sowie zu diversen anderen elektrischen Verbrauchern 14 zur elektrischen Versorgung der Verbraucher eingerichtet. Mit anderen Worten erfolgt eine direkte Ansteuerung der elektrischen Verbraucher 11, 12, 13, 14 über jeweilige Schalter der Bedieneinheit 8. Zwar ist auf diese Weise keine an den Verbrauchern 11, 12, 13, 14 vorgesehene dezentrale Spannungssteuerungseinheit erforderlich, der Aufwand im Kabelbaum nimmt mit der Anzahl zu versorgender elektrischer Verbraucher erheblich zu.

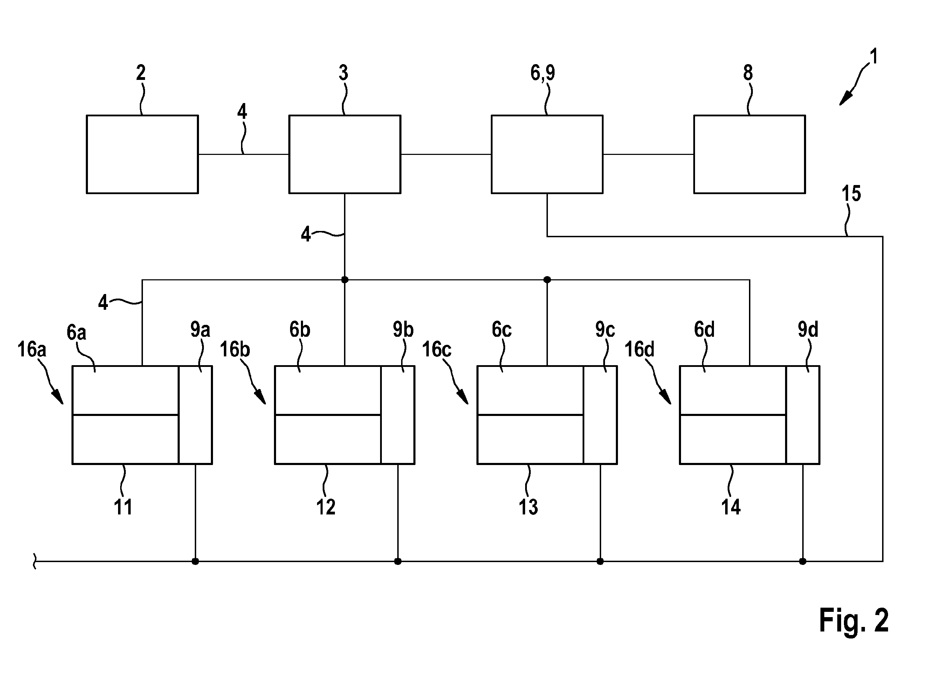

Figur 2 zeigt eine Prinzipskizze einer Bordnetzgruppe 1 für ein elektrisch antreibbares Fortbewegungsmittel gemäß einem Ausführungsbeispiel der vorliegenden Erfindung. Die Bordnetzgruppe 1 umfasst ebenfalls eine Antriebseinheit 2, eine Traktionsbatterie 3, eine Spannungssteuerungseinheit 6 mit integriertem CAN-Steuergerät 9 als BUS-Steuergerät und eine Bedieneinheit 8 in einem Hochvoltabschnitt 4 der Bordnetzgruppe 1. Über die Traktionsbatterie 3 wird eine Spannung in Höhe von 48V an vier DC/DC-Wandlereinheiten 16a, 16b, 16c, 16d verteilt. Jede der DC/DC-Wandlereinheiten 16a, 16b, 16c, 16d umfasst einen jeweiligen DC/DC-Wandler 6a, 6b, 6c, 6d, und ein BUS-Steuergerät 9a, 9b, 9c, 9d, welche über einen CAN-BUS 15 mit dem zentralen CAN-Steuergerät 9 informationstechnisch verbunden sind. Die erste DC/DC-Wandlereinheit 16a weist weiter eine erste Gruppe 11 elektrischer Verbraucher in Form einer Frontlichtanlage und eines Blinkers bzw. eine zweite Gruppe 12 elektrischer Verbraucher in Form einer Rücklichtanlage und eines Blinkers bzw. eine dritte Gruppe 13 elektrischer Verbraucher in Form von Instrumenten und einer Hupe bzw. eine vierte Gruppe 14 elektrischer Verbraucher auf. Durch die Verteilung der elektrischen Energie mittels des Hochvoltabschnitts 4 und die dezentrale Wandlung in Nähe der Verbraucher sinkt der Strom bei gleicher Leistung, wodurch weniger Kupferverluste entstehen. Zudem besteht bei einer erfindungsgemäßen Anordnung keine Gefahr durch einen Kurzschluss der 48V-Spannung mit der 12V-Spannung im Kabelbaum, welche andernfalls dazu führen würde, dass sämtliche angeschlossene 12V-Geräte (Verbraucher) zerstört würden bzw. kurzschlussfest gegen 48V ausgelegt werden müssten. Dadurch lässt sich der Isolationsaufwand im Kabelbaum minimieren. Zudem sind die Verbraucher ebenso wie die dezentralen DC/DC-Wandler 6a, 6b, 6c, 6d über den CAN-BUS 15 aufweckbar, sodass Ruhezustandsverluste minimiert werden können.

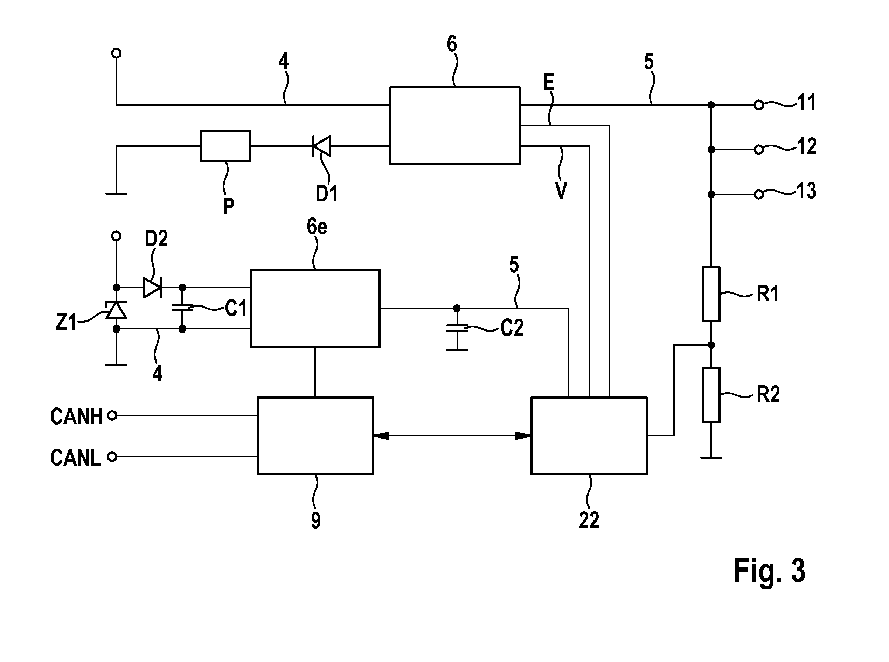

Figur 3 zeigt ein Blockschaltbild eines elektronischen Bauteils gemäß einem Ausführungsbeispiel der vorliegenden Erfindung. Zur Wandlung einer elektrischen Spannung zwischen dem Hochvoltabschnitt 4 und dem Niedervoltabschnitt 5 ist ein DC/DC-Wandler 6 in Form eines Schaltreglers vorgesehen, dessen Eingang über ein Bauteil P zur polaritätsunabhängigen elektrischen Verbindung mit dem Hochvoltabschnitt 4 sowie über eine erste Diode D1 als Verpolungsschutz angeschlossen ist. Ausgangsseitig werden drei Gruppen 11, 12, 13 elektrischer Verbraucher über den Niedervoltabschnitt 5 mit elektrischer Energie versorgt, wobei ein elektrischer Spannungsteiler R1, R2 zu Diagnosezwecken (z.B. Kurzschlusserkennung o.ä.) informationstechnisch mit einem Eingang einer Auswerteeinheit in Form eines Mikrocontrollers 22 verbunden ist. Weiter sind eine Fehlerleitung E zur Meldung eines Fehlerfalls und eine Steuerleitung V zur Einstellung eines niederspannungsseitigen Spannungspegels zwischen dem DC/DC-Wandler 6 und dem Mikrocontroller 22 vorgesehen. Auch ein CAN-Steuergerät steht in informationstechnischer Verbindung mit dem Mikrocontroller 22 und wird über einen weiteren DC/DC-Wandler 6e aus dem Hochvoltabschnitt 4 mit elektrischer Energie versorgt. Der hochvoltseitige Eingang des weiteren DC/DC-Wandlers 6e ist über eine zweite Diode D2, eine Zenerdiode Z1 und einen Pufferkondensator C1 abgesichert bzw. eingangsseitig stabilisiert. Ein Ausgang des weiteren DC/DC-Wandlers 6e ist über einen zweiten Pufferkondensator C2 eingerichtet, auch den Mikrocontroller 22 elektrisch zu versorgen. Das dargestellte elektronische Bauteil ist eingerichtet, über die CANH- bzw. CANL-Leitungen erhaltene CAN-Signale auszuwerten und die Gruppen 11, 12, 13 elektrischer Verbraucher entsprechend mit elektrischer Energie zu versorgen oder deren elektrische Energieversorgung anzupassen.

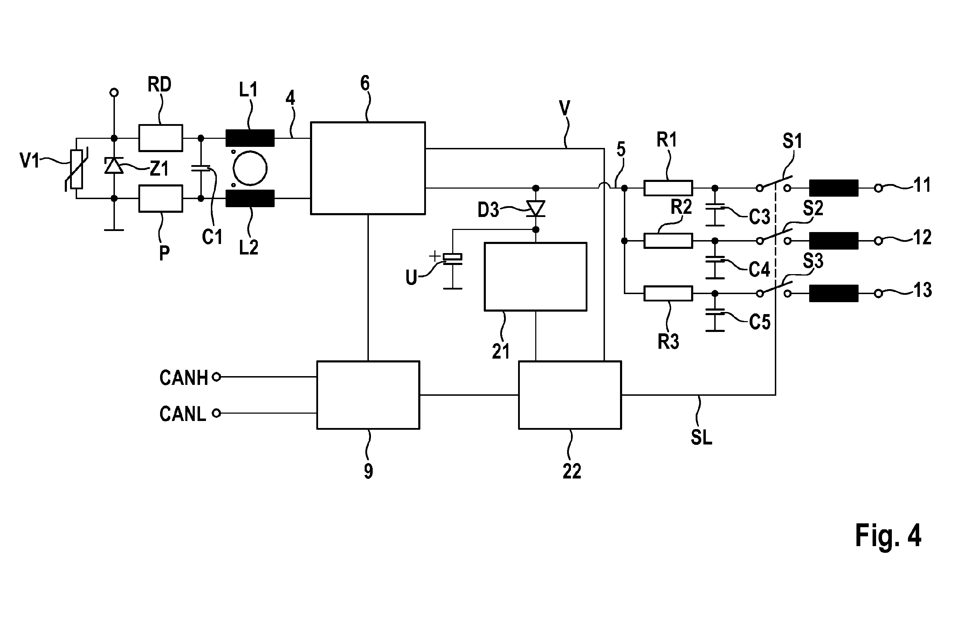

Figur 4 zeigt ein Blockschaltbild eines zweiten Ausführungsbeispiels eines elektronischen Bauteils, bei welchem lediglich ein DC/DC-Wandler 6 sowohl zur Versorgung der internen Instanzen (CAN-Steuergerät 9 und Mikrocontroller 22) sowie die externen Gruppen 11, 12, 13 elektrischer Verbraucher mit elektrischer Energie zu versorgen. Eingangsseitig wird der DC/DC-Wandler 6 über eine Parallelschaltung einer Zenerdiode Z1 und eines Varistors V1 sowie einen Verpolungsschutz P, einen ohmschen Widerstand R0, eine Pufferkapazität C1 und zwei induktiv gekoppelte Spulen L1, L2 abgesichert bzw. stabilisiert. Über die Leitungen CANH bzw. CANL empfangene Signale werden vom CAN-Steuergerät 9 interpretiert und zur Ansteuerung des DC/DC-Wandlers 6 und/oder zur Auswertung durch den Mikrocontroller 22 weitergeleitet. Der Mikrocontroller 22 ist eingerichtet, über eine Spannungssteuerungsleitung V die elektrische Spannung auf dem Niedervoltabschnitt 5 zu beeinflussen. Um der Sensibilität des Mikrocontrollers 22 bezüglich seiner Spannungsversorgung gerecht zu werden, wird dessen Eingang über eine dritte Diode D3 und einen Linearregler 21 mit elektrischer Energie aus dem Niedervoltabschnitt 5 versorgt. Eine Gleichspannungsquelle in Form eines Pufferkondensators U speichert eine elektrische Spannung des DC/DC-Wandlers 6, um den Linearregler 21 (umfassend einen Mikrocontroller) auch im Fehlerfall stetig mit elektrischer Energie zu versorgen. Im Detail verhindert die Diode D3 ein Abfließen der Ladung im Falle eines Kurzschlusses der Spannungsversorgung (z.B. an den Verbrauchern 11, 12, 13). Damit hat der Linearregler 21 genug Zeit, den Kurzschluss über die Schalter S1, S2, S3 abzuwerfen. Ein ausgangsseitiger Kurzschluss an den Gruppen 11, 12, 13 wird über das die Komponenten R1, R2, R3, C3, C4, C5 umfassende Netzwerk erkannt, im Ansprechen worauf der Mikrocontroller 22 über eine Steuereinheit SL die Schalter S1, S2, S3 öffnen und fehlerhafte Lasten somit abwerfen kann.

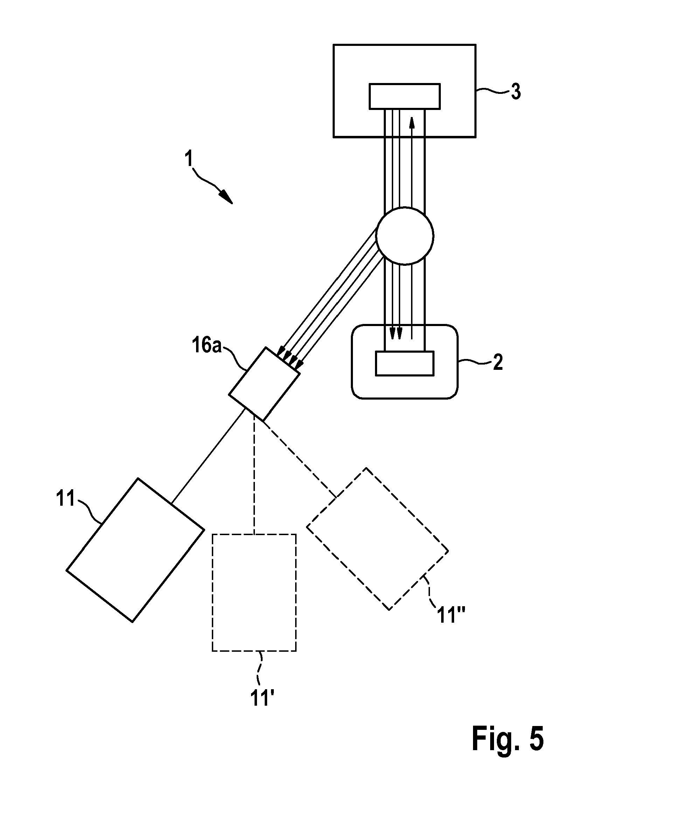

Figur 5 zeigt eine Bordnetzgruppe 1, in welcher eine Traktionsbatterie 3 über ein Serien-Y-Kabel für elektrisch antreibbare Fahrzeuge mit einer Traktionsmaschine 2 sowie einer erfindungsgemäß ausgestalteten DC/DC-Wandlereinheit 16a informationstechnisch sowie elektrisch verbunden ist. Die DC/DC-Wandlereinheit 16a ist als Leiterplatte ausgeführt und in ein Kleingehäuse eingepasst. Ihr Ausgang ist an eine Lampe als Gruppe 11 elektrischer Verbraucher angeschlossen. Sie dient der Verwendung als Vorderlicht eines elektrisch antreibbaren Zweirads. Außerdem sind weitere Ausgänge zur Versorgung zusätzlicher elektrischer Verbrauchergruppen 11', 11" vorgesehen.

## Patentansprüche

1. Bordnetzgruppe (1) für ein elektrisch antreibbares Fortbewegungsmittel umfassend:
- einen Hochvoltabschnitt (4),
- einen Niedervoltabschnitt (5),
- eine erste DC/DC-Wandlereinheit (16a), und
- eine zweite DC/DC-Wandlereinheit (16b), wobei
- die erste DC/DC-Wandlereinheit (16a) eingangsseitig am Hochvoltabschnitt (4) angeschlossen ist, und ausgangsseitig zur Versorgung einer ersten Gruppe (11) elektrischer Verbraucher im Niedervoltabschnitt (5) eingerichtet ist, und
- die zweite DC/DC-Wandlereinheit (16b) eingangsseitig am Hochvoltabschnitt (4) angeschlossen ist, und im Gegensatz zur ersten Gruppe (11) elektrischer Verbraucher ausgangsseitig zur Versorgung einer zweiten Gruppe (12) elektrischer Verbraucher im Niedervoltabschnitt (5) eingerichtet ist.

2. Bordnetzgruppe nach Anspruch 1, wobei die erste DC/DC-Wandlereinheit (16a) ein erstes BUS-Steuergerät (9a) umfasst, welches eingerichtet ist,
- eine Energieversorgung eines Verbrauchers der ersten Gruppe (11) elektrischer Verbraucher zu steuern und/oder
- einen DC/DC-Wandler (6a) der ersten DC/DC-Wandlereinheit (16a) aufzuwecken und/oder in einen Ruhezustand zu versetzen.

3. Bordnetzgruppe nach Anspruch 1 oder 2, weiter umfassend
- ein zentrales BUS-Steuergerät (9), und
- eine Bedieneinheit (8), welche eingerichtet ist, im Ansprechen auf eine Anwendereingabe das zentrale, insbesondere im Hochvoltabschnitt (4) angeordnete, BUS-Steuergerät (9) anzuweisen, eine Nachricht an das erste BUS-Steuergerät (9a) zur Steuerung der Energieversorgung eines Verbrauchers der ersten Gruppe (11) elektrischer Verbraucher zu senden.

4. Bordnetzgruppe nach einem der vorstehenden Ansprüche, wobei
- die erste Gruppe (11) und/oder die zweite Gruppe (12) elektrischer Verbraucher
- ein Frontlicht und
- einen Fahrtrichtungsanzeiger
umfasst, und/oder
-
- ein Rücklicht und
- einen Fahrtrichtungsanzeiger
umfasst, und/oder wobei die
- erste Gruppe (11) elektrischer Verbraucher oder die zweite Gruppe (12) elektrischer Verbraucher
- ein Anzeigeinstrument und/oder
- eine akustische Signaleinrichtung umfasst.

5. Bordnetzgruppe nach einem der vorstehenden Ansprüche, wobei
- der Hochvoltabschnitt (4) eine Nennspannung im Bereich zwischen 30V und 800V, insbesondere zwischen 45V und 80V aufweist, und/oder
- der Niedervoltabschnitt (5) eine Nennspannung im Bereich zwischen 5V und 30V, insbesondere zwischen 12V und 24V aufweist.

6. Elektronisches Bauteil für ein elektrisch antreibbares Fortbewegungsmittel, wobei das Bauteil umfasst
- einen Eingang zum Anschluss eines Hochvoltabschnittes (4),
- einen Eingang zum Anschluss eines Niedervoltabschnittes (5) mit einer Gruppe (11) elektrischer Verbraucher,
- einen DC/DC-Wandler (6a), und
- ein BUS-Steuergerät (9a), wobei
- das BUS-Steuergerät (9a) eingerichtet ist, den DC/DC-Wandler (6a) aufzuwecken und/oder in einen Ruhezustand zu versetzen.

7. Elektronisches Bauteil nach Anspruch 6 weiter umfassend
- eine Auswerteeinheit (22),
welche eingerichtet ist, die Gruppe (11) elektrischer Verbraucher im Ansprechen auf ein Signal des BUS-Steuergerätes (9a) mit elektrischer Energie zu versorgen.

8. Elektronisches Bauteil nach Anspruch 6 oder 7 weiter umfassend einen zweiten DC/DC-Wandler (6e), welcher eingerichtet ist, die Auswerteeinheit (22) unabhängig von der Gruppe (11) elektrischer Verbraucher mit elektrischer Energie zu versorgen.

9. Bordnetzgruppe nach einem der Ansprüche 1 bis 5 oder elektronisches Bauteil nach einem der Ansprüche 6 bis 8, wobei das BUS-Steuergerät (9; 9a, 9b, 9c, 9d) ein CAN-Steuergerät ist.

10. Elektrisch antreibbares Fortbewegungsmittel umfassend eine Bordnetzgruppe nach einem der vorstehenden Ansprüche 1 bis 5 und/oder ein elektronisches Bauteil nach einem der vorstehenden Ansprüche 6 bis 9.
